## Europäisches Patentamt

## European Patent Office

## Office européen des brevets

(11) Veröffentlichungsnummer: **0 271 055**
**A2**

(12) **EUROPÄISCHE PATENTANMELDUNG**

(21) Anmeldenummer: **87118135.0**

(22) Anmeldetag: **08.12.87**

(51) Int. Cl.⁴: **H04N 5/76**

(30) Priorität: **10.12.86 DE 3642186**

(43) Veröffentlichungstag der Anmeldung:
**15.06.88 Patentblatt 88/24**

(84) Benannte Vertragsstaaten:
**AT BE CH DE ES FR GB IT LI NL SE**

(71) Anmelder: **Standard Elektrik Lorenz
Aktiengesellschaft
Lorenzstrasse 10
D-7000 Stuttgart 40(DE)**

(72) Erfinder: **Mitschke, Helmut
Obere Breitstrasse 8
D-7535 Königsbach-Stein 1(DE)**

(74) Vertreter: **Pohl, Heribert, Dipl.-Ing et al
Standard Elektrik Lorenz AG Patent- und
Lizenzwesen Postfach 30 09 29
D-7000 Stuttgart 30(DE)**

(54) **Videorecorder mit einem zweiten Videosignalweg.**

(57) Am Eingang des Videosignalweges (31) einer Bilc-in-Bild-Einblendschaltung (23) eines Videorecorders (22) ist anstelle eines Farbdifferenzdecoders ein Farbdecoder (24) angeordnet, der ein von der Übertragungsnorm der Videosignale unabhängiges RGB-Ausgangssignal erzeugt. Dieses RGB-Signal wird digitalisiert und mittels eines Demultiplexers (39) so komprimiert, daß in einem Bild-in-Bild-Speicher (41) die für ein kleines Videobild (40) in einem über einen ersten Videosignalweg (29) übertragenen großen Videobild (30) erforderlichen Signale zeilenweise gespeichert sind. Diese Signale werden nach einer Rückwandlung in analoge Form einem gesteuerten RGB-Eingang (44) des Fernsehempfängers (26) zur Darstellung auf dem Bildschirm (25) zugeführt.

FIG. 2

EP 0 271 055 A2

## Videorecorder mit einem zweiten Videosignalweg

Die Erfindung betrifft einen Videorecorder nach dem Oberbegriff des Patentanspruches. Die Bild-in-Bild-Einblendschaltung eines derartigen Videorecorders ermöglicht dem Benutzer des Videorecorders neben der Wiedergabe des Bildes der auf dem magetisierbaren Informationsträger gespeicherten Videoinformation die Videoinformation einer zweiten Videosignalquelle, beispielsweise eine vom Tuner des Videorecorders empfangene Fernsehsendung nebenbei in einem in das Bild der ersten Videosignalquelle eingeblendeten verkleinerten Bild zu beobachten.

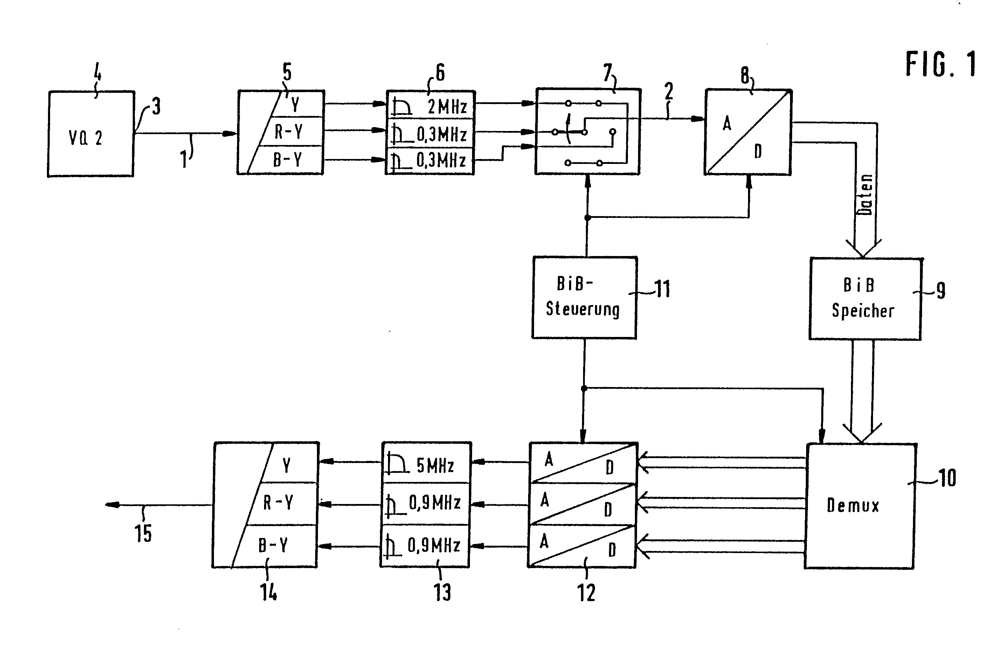

Ein derartiger Videorecorder ist aus der Zeitschrift J.E.I. (Japanese Electronic Industry) August 1986, Seiten 36 und 37 bekannt. Von diesem Recorder ist in Fig. 1 in einem Blockschaltbild der zweite Videosignalweg einer Bild-in-Bild-Einblendschaltung schematisch dargestellt. An den Videosignaleingang 1 des Videosignalweges 2 dieser bekannten Bild-in-Bild-Einblendschaltung ist der Videosignalausgang 3 einer Videosignalquelle 4 angeschlossen. Hinter dem Eingang 1 des Videosignalweges 2 ist ein Farbdifferenzdecoder 5 angeordnet, dem eine Tiefpaßschaltung 6 und ein Multiplexer 7 für einen Analog-Digitalwandler 8 nachgeschaltet ist. Der daran anschließende Digitalteil enthält einen Bild-in-Bild-Speicher 9 und einen Demultiplexer 10 und einen Digital-Analogwandler 12, dem eine weitere Tiefpaßschaltung 13 und ein Farbdifferenzcoder 14 zur Bildung eines Farbvideosignales am Videosignalausgang 15 des zweiten Videosignalweges nachgeschaltet sind. Der Digitalteil, der Multiplexer und der Demultiplexer sowie die Wandlerschaltungen werden von einer Bild-in-Bild-Steuerschaltung 11 gesteuert. In dem bekannten Videodecoder ist die Bild-in-Bild-Einblendschaltung für die Übertragung einer bestimmten Übertragungsnorm eingerichtet. Sollen über diesen Videosignalweg Videosignale unterschiedlicher Übertragungsnormen, beispielsweise PAL oder SECAM übertragen werden, ist insbesondere wegen der dann erforderlichen unterschiedlichen Farbdifferenzdecoder und Farbdifferenzcoder und der zugehörigen Tiefpaßschaltungen ein erheblicher Schaltungsaufwand notwendig, der die Wirtschaftlichkeit derartiger Geräte erheblich beeinträchtigt.

Der Erfindung liegt die Aufgabe zugrunde, in einem für die Übertragung von Videosignalen unterschiedlicher Übertragungsnormen vorgesehenen Videorecorder die Bild-in-Bild-Einblendschaltung so auszugestalten, daß die Möglichkeit zur Einstellung unterschiedlicher Übertragungsnormen nur einen verhältnismäßig geringen zusätzlichen Schaltungsaufwand erfordert.

Diese Aufgabe wird nach der Erfindung durch die im kennzeichnenden Teil des Anspruches angegebenen Merkmale gelöst.

Durch die erfindungsgemäße Verwendung eines Farbdecoders anstelle eines Farbdifferenzdecoders im Videosignalweg der Bild-in-Bild-Einblendschaltung können nicht nur die nachgeschalteten Tiefpaßschaltungen entfallen. Wegen der nur noch erforderlichen gleichen Wichtung der Farbsignale RGB am Ausgang des Farbdecoders kann auch der Multiplexer und der Demultiplexer einfacher ausgestaltet werden. Außerdem kann der Bild-in-Bildspeicher wesentlich kleiner bemessen werden. Durch den Anschluß des Ausganges der erfindungsxgemäßen Bild-in-Bild-Einblendschaltung an einen schaltbaren RGB-Eingang des Farbfernsehgerätes wird nicht nur die Verwendung eines Farbcoders überflüssig. Es tritt durch die eingesparte Signalumwandlung in einem Farbcoder zusätzlich eine wesentlich geringere Verzerrung des Videosignales am Ausgang dieses Signalweges und damit eine höhere Bildqualität für das Bild-in-Bild auf dem Bildschirm auf. Dies ist besonders wichtig, da das verkleinerte Bild-in-Bild mit der gleichen Auflösung auf dem Bildschirm dargestellt wird, wie das auf dem normalen Videosignalweg des Fernsehgerätes übertragene Videobild.

Die Erfindung wird nachfolgend anhand eines vorteilhaften Ausführungsbeispieles näher erläutert. In den Zeichnungen zeigen

Fig. 1 ein Blockschaltbild einer Bild-in-Bild-Einblendschaltung eines bekannten Videorecorders,

Fig. 2 ein Blockschaltbild aus einem Videorecorders mit einer Bild-in-Bild-Einblendschaltung und einem angeschlossenen Farbfernsehgerät.

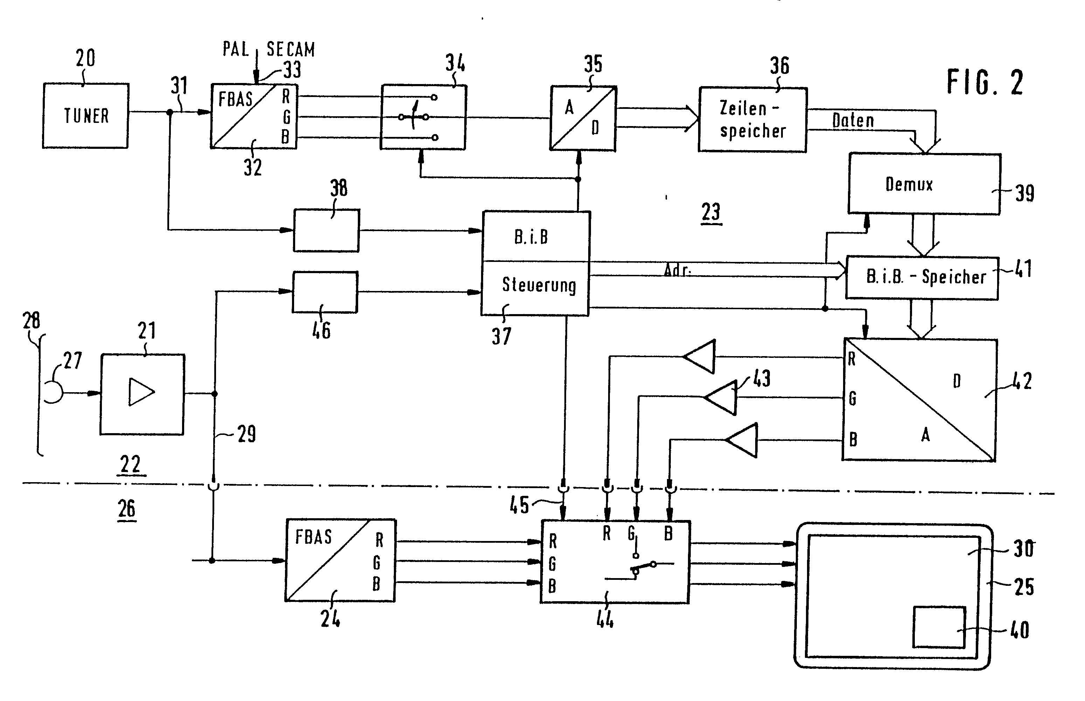

In Fig. 2 ist mit einem Block 20 ein Tuner eines Videorecorders 22, mit dem Block 21 die Wiedergabeanordnung dieses Videorecorders und mit dem Block 23 eine Bild-in-Bild-Einblendschaltung dieses Videorecorders schematisch dargestellt. Der Block 24 stellt einen Farbdecoder eines an den Videorecorder 22 angeschlossenen Farbfernsehgerätes 26 dar, das einen Bildschirm 25 enthält. Mit einem Videokopf 27 des Videorecorders 22 werden die auf einem Informationsträger 28, beispielsweise einem Videoband 28 gespeicherten Videoinformationen abgetastet und von der Wiedergabeanordnung 21 als FBAS-Videosignal auf einen ersten Videosignalweg 29 des Videorecorders übertragen. Dieses Videosignal wird in dem Farbdecoder 24 in ein RGB-Signal umgewandelt, das auf dem Bildschirm 25 das entsprechende Videobild 30 erzeugt.

Gleichzeitig wird von dem Tuner 20 als zweiter Videosignalquelle des Videorecorders 22 ein Videosignal einer mittels des Tuners 20 empfangenen Sendung erzeugt und dem Videosignalweg 31 der Bild-in-Bild-Einblendschaltung 23 als FBVAS-Signal zugeführt wird. Dieser mit zweiter Videosignalweg 31 des Videorecorders 22 bezeichnete Signalweg enthält an seinem Eingang ebenfalls einen Farbdecoder 32, der das von dem Tuner 20 erzeugte FBAS-Videosignal in ein RGB-Signal umwandelt. Dieser Farbdecoder 32 ist an einem Steuereingang 33 auf die Umwandlung und Übertragung von Videosignalen der PAL-Übertragungsnorm oder der SECAM Übertragungsnorm umschaltbar. An den Ausgang des Farbdecoders 32 ist ein Multiplexer 34 angeschlossen, der die am Ausgang des Farbdecoders 32 parallel anstehenden RGB-Signale nacheinander und ohne unterschiedliche Zeitwertung abtastet und einem Analog-Digitalwandler 35 zuleitet. Die digitalisierten RGB-Signale werden in einem Zeilenspeicher 36 gespeichert, der von einer Bild-in-Bild-Steuerschaltung 37, gesteuert wird. Die Bild-in-Bild-Steuerschaltung kann Bestandteil eines Microprozessors sein. Eine Synchronsignal-Abtrennschaltung 38 wird von den Synchronsignalen der von der Tunerschaltung 20 erzeugten Videosignalen gesteuert und bildet ihrerseits die Taktsignale für die Bild-in-Bild-Steuerschaltung 37, die die Abtastung und Einspeicherung der digitalisierten Videosignale steuert.

Ein dem Zeichenspeicher 36 nachgeschalteter Demultiplexer 39, der ebenfalls von der Bild-in-Bild-Steuerschaltung 37 gesteuert wird, überträgt die für das verkleinerte Videobild 40 zur Einblendung in das Videobild 30 vorgesehenen Zeilen aus dem Zeilenspeicher 36 in komprimierter Form in einen Bild-in-Bild-Speicher 41. Die Übertragung der digitalisierten Videoinformationen in den Bild-in-Bild-Speicher 41 und deren Abruf aus dem Bild-in-Bild-Speicher wird von den in einer Abtrennschaltung 46 abgetrennten Synchronsignalen der auf dem ersten Videosignalweg 29 übertragenen Videosignalen gesteuert. Die mittels Digital-Analogwandlern 42 in die Analogform umgewandelten Videosignale für das kleine Videobild 40 im großen Videobild 30 werden über Anpaß-und Treiberverstärker 43 einem schaltbaren RGB-Eingang 44 des Farbfernsehempfängers 26 zugeführt. Dieser schaltbare RGB-Eingang 44 überträgt die ihm angebotenen RGB-Signale anstelle der von dem Farbdecoder 24 des Farbfernsehempfängers 26 erzeugten RGB-Signale an den Bildschirm 25, solange die Bild-in-Bild-Steuerschaltung 37 an einem Steuereingang 45 ein Übernahmesignal erzeugt.

Dadurch, daß der Farbdecoder 32 am Eingang des zweiten Videosignalweges 31 des Videorecorders 22 ein von der Übertragungsnorm der Übertragenen Videosignale unabhängiges Ausgangssignal, nämlich ein RGB-Videosignal erzeugt, ist die gesamte nachfolgende Signalbearbeitung im Videosignalweg 31 der dargestellten Bild-in-Bild-Einblendschaltung 23 unabhängig von der Übertragungsnorm der empfangenen Videosignale.

## Ansprüche

Videorecorder mit einem ersten Videosignalweg und einem an dessen Videosignalausgang angeschlossenen Farbfernsehgerät und mit einem zweiten Videosignalweg einer Bild-in-Bild-Einblendschaltung für die Videosignale einer zweiten Videosignalquelle, **dadurch gekennzeichnet**, daß der Eingang des zweiten Videosignalweges (31) anstelle eines Farbdifferenzdecoders einen Farbdecoder (32) für die Farbsignale RGB enthält und daß der Ausgang des zweiten Videosignalweges (31) über Anpassungsverstärker (43) an einen schaltbaren RGB-Eingang (44) des Farbfernsehgerätes (26) angeschlossen ist.

0 271 055

FIG. 1

FIG. 2

H. Mitschke-4